# EUROPEAN PATENT APPLICATION

(11) **EP 3 116 095 A1**
(43) Date of publication of application: **11.01.2017**
(21) Application number: 16178079.6
(22) Date of filing: 06.07.2016
(51) Int. Cl.: H02J 7/14, H02J 7/00, B60L 11/18

(54) **POWER SUPPLY SYSTEM**

(30) Priority: 10.07.2015 JP 2015138460
(71) Applicant: Toyota Jidosha Kabushiki Kaisha, Toyota-shi, Aichi-ken, 471-8571 (JP)
(72) Inventor: OBA, Tomoko, TOYOTA-SHI, AICHI-KEN, 471-8571 (JP); KAJI, Masaya, TOYOTA-SHI, AICHI-KEN, 471-8571 (JP); UKEGAWA, Hiroshi, TOYOTA-SHI, AICHI-KEN, 471-8571 (JP); ONISHI, Yukio, TOYOTA-SHI, AICHI-KEN, 471-8571 (JP)
(74) Representative: Intès, Didier Gérard André

(57) **Abstract**

A power supply system includes a first voltage converter (10) provided between a first power storage device (B1) and a power feed line (PL). The first voltage converter (10) includes a first reactor (L1), a first upper switching element (Q1), a first lower switching element (Q2) and a first shutoff device (50). The first shutoff device (50) is provided in a first path (70) between the other end (Y) of the first reactor (L1) and a connection point (X). The connection point (X) is a connection point between the power feed line (PL) and the second supply line (PL2). The first shutoff device (50) configured to shut off the first path (70) when short circuit failure occurs in the first upper switching element (Q1).

## Description

### BACKGROUND OF THE INVENTION

### 1. Field of the Invention

The invention relates to a power supply system and, in particular, to a power supply system that supplies electric power to a drive unit.

### 2. Description of Related Art

A power supply system that supplies electric power to a drive unit such as a motor is mounted in electric vehicles such as an electric car and a hybrid vehicle.

For example, in Japanese Patent Application Publication No. 2010-226869 (JP 2010-226869 A), an electric vehicle is disclosed in which two batteries (power storage devices), voltages of which differ from each other, are connected in parallel to a power feed line to a motor and in which the voltage of the battery is increased by a boosting converter (a voltage converter) that is provided between the battery on a low-voltage side and the power feed line. In this electric vehicle, in the case where short circuit failure of an upper arm element occurs in the boosting converter that is connected to the battery on the low-voltage side, a path between the battery on the low-voltage side and the boosting converter is shut off by a switch that is provided in the path in order to prevent a short circuit current from flowing through the batteries on a high-voltage side and the low-voltage side.

In the electric vehicle disclosed in JP 2010-226869 A, it is possible to prevent the short circuit current from flowing through the batteries on the high-voltage side and the low-voltage side by shutting off the path between the battery on the low-voltage side and the boosting converter by the switch that is provided in the path. However, because a path from the battery on the high-voltage side to the boosting converter remains to be connected, the voltage of the battery on the high-voltage side is applied to a reactor that is contained in the boosting converter. As a result, the reactor is possibly damaged.

### SUMMARY OF THE INVENTION

The invention has been made to solve the above problem, and therefore has purposes of preventing generation of a short circuit current from a power storage device on a high-voltage side toward a power storage device on a low-voltage side and preventing damage to a reactor that is contained in a voltage converter, which is caused by application of a voltage of the power storage device on the high-voltage side.

A power supply system according to the invention supplies electric power to a drive unit. The power supply system includes a first power storage device, a second power storage device, and a first voltage converter. The first power storage device can supply electric power to a power feed line to the drive unit. The second power storage device is connected to the power feed line, in particular via a second power feed line, in a manner to be parallel with the first power storage device and can supply electric power, a voltage of which is higher than that of the first power storage device, to the power feed line. The first voltage converter is provided between the first power storage device and the power feed line. The first voltage converter includes a first reactor, a first upper switching element, and a first lower switching element. One end of the first reactor is connected to a positive electrode of the first power storage device. The first upper switching element is provided between the other end of the first reactor and the power feed line. The first lower switching element is provided between the other end of the first reactor and a negative electrode of the first power storage device. In a first path between the other end of the first reactor and a connection point between the power feed line and a supply line, in particular the second power feed line, for supplying the electric power from the second power storage device to the power feed line, a first shutoff device is provided to shut off the first path when short circuit failure occurs in the first upper switching element.

According to such a configuration, in the case where the short circuit failure of the first upper switching element occurs in the first voltage converter, the first path between the other end of the first reactor and the connection point between the power feed line and the supply line for supplying the electric power from the second power storage device to the power feed line is shut off by the first shutoff device. Accordingly, it is possible to prevent generation of a short circuit current from the second power storage device on a high-voltage side toward the first power storage device on a low-voltage side, and it is also possible to prevent damage to the first reactor, which is caused by application of the voltage of the second power storage device thereto.

The first shutoff device may have two switching elements that are respectively in the same specifications as the first upper switching element and the first lower switching element. In particular, the first shutoff device may include a third switching element and a fourth switching element, the third switching element being in the same specification as the first upper switching element, and the fourth switching element being in the same specification as the first lower switching element.

According to such a configuration, the same module as a module in which the first upper switching element and the first lower switching element are integrated can be used for the first shutoff device. Thus, parts can be made common.

The power supply system may further include a second voltage converter that is provided between the second power storage device and the power feed line.

According to such a configuration, even in the case where the short circuit failure of an upper switching element occurs in the first voltage converter, the electric power can stably be supplied to the drive unit.

The second voltage converter may include a second reactor, a second upper switching element, and a second lower switching element. One end of the second reactor is connected to a positive electrode of the second power storage device. The second upper switching element is provided between the other end of the second reactor and the power feed line. The second lower switching element is provided between the other end of the second reactor and a negative electrode of the second power storage device. In a second path between the other end of the second reactor and the connection point between the power feed line and a supply line, being in particular a first power feed line, for supplying the electric power from the first power storage device to the power feed line, a second shutoff device is provided to shut off the second path when short circuit failure occurs in the second upper switching element.

According to such a configuration, in the case where the short circuit failure of the second upper switching element occurs in the second voltage converter, the second path between the other end of the second reactor and the connection point between the power feed line and the supply line for supplying the electric power from the first power storage device to the power feed line is shut off by the second shutoff device. Accordingly, even in the case where the high-voltage side and the low-voltage side are reversed due to variations in the voltages of the first power storage device and the second power storage device, or the like, it is possible to prevent generation of the short circuit current from the first power storage device toward the second power storage device, and it is also possible to prevent damage to the second reactor, which is caused by application of the voltage of the first power storage device thereto.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view that shows a configuration of an electric vehicle;
FIG. 2 is a view that shows a path of a short circuit current in the case where short circuit failure of an upper arm element occurs in a boosting converter that is connected to a power storage device on a low-voltage side;
FIG. 3 is a flowchart that shows one example of processing of an ECU;
FIG. 4 is a view that shows a power supply system in the case where a boosting converter that is connected to a power storage device on a high-voltage side is not provided;
FIG. 5 is a view that shows the power supply system in the case where a switching device is provided in the booster converter that is connected to the power storage device on the high-voltage side;
FIG. 6 is a view that shows the power supply system in the case where a relay is used for the switching device;
FIG. 7 is a view that shows the power supply system in the case where the switching device is provided between a connection point Y and the other end of a reactor; and
FIG. 8 is a view that shows the power supply system in the case where the switching device is provided between a connection point X and the upper arm element.

### DETAILED DESCRIPTION OF EMBODIMENTS

A detailed description will be provided on an embodiment of the invention with reference to the drawings. It is noted that the same or corresponding portions in the drawings to be referred are denoted by the same reference numerals and a description thereon will not be repeated.

In this embodiment, as an exemplary mode of an electric vehicle, a description will be provided on an electric car in which an engine is not mounted and that can travel by an operation of a motor generator MG. It is noted that the electric vehicle is not limited to the electric car but may be a hybrid vehicle that can travel by the operations of both of the engine and the motor generator MG.

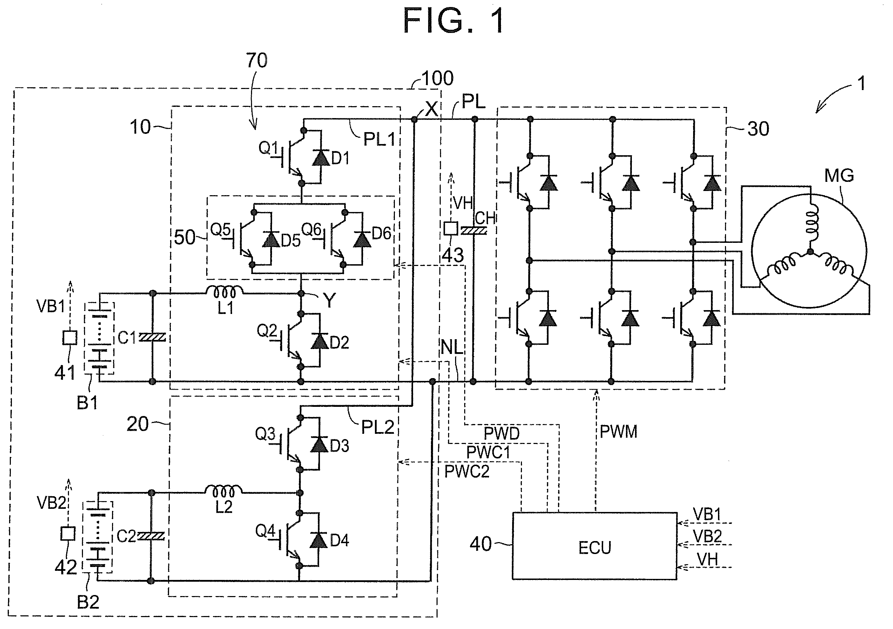

FIG. 1 is a view that shows a configuration of an electric vehicle 1. The electric vehicle 1 includes an electronic control unit (ECU) 40, the motor generator MG, an inverter 30, a smoothing capacitor CH, and a power supply system 100.

The ECU 40 includes a central processing unit (CPU), a memory, and a buffer, none of which is shown. On the basis of a map, a program, and the like that are stored in the memory, the ECU 40 executes computation processing using a detection result from each sensor, and outputs a control signal that corresponds to a result of the computation processing. It is noted that it may be configured so that a portion or all of the ECU 40 executes the computation processing by hardware such as an electronic circuit.

The motor generator MG and the inverter 30 correspond to one embodiment of the "drive unit". The motor generator MG rotates drive wheels (not shown) by AC power that is supplied from the inverter 30. In correspondence with a control signal PWM from the ECU 40, the inverter 30 converts a DC current that is supplied from the power supply system 100 via a power feed line PL into a three-phase AC current and outputs the three-phase AC current to the motor generator MG.

The smoothing capacitor CH is connected between the power feed line PL and a ground line NL and smoothes a voltage VH between terminals. The smoothing capacitor CH is provided with a voltage sensor 43 that detects the voltage VH and outputs the detection result to the ECU 40.

The power supply system 100 includes: a battery B1 and a battery B2, both of which can supply electric power to the power feed line PL; a smoothing capacitor C1 that is connected to both ends of a positive electrode and a negative electrode of the battery B 1; a smoothing capacitor C2 that is connected to both ends of a positive electrode and a negative electrode of the battery B2; a boosting converter 10 that is provided between the battery B1 and each of the power feed line PL and the ground line NL; and a boosting converter 20 that is provided between the battery B2 and each of the power feed line PL and the ground line NL.

The battery B1 corresponds to one embodiment of the "first power storage device", and the battery B2 corresponds to one embodiment of the "second power storage device". The battery B1 and the battery B2 are each a DC power supply that is configured to be chargeable/dischargeable, and are each configured by including a secondary battery, such as a lithium-ion battery or a nickel hydrogen battery, or a power storage element, such as an electric double layer capacitor. It is noted that the battery B1 and the battery B2 may be configured to be chargeable by using the electric power from the outside. For example, the battery B1 and the battery B2 may be connected to a charger that can be connected to an external power supply, and the electric power may be supplied from the external power supply to the battery B1 and the battery B2 when a user connects the charger to the external power supply.

The battery B2 is connected to the power feed line PL in a manner to be parallel with the battery B1. In this embodiment, the battery B2 can supply the electric power, a voltage of which is higher than that of the battery B1, to the power feed line PL.

The smoothing capacitor C1 smoothes a voltage VB1 between terminals of the battery B1. The battery B1 is provided with a voltage sensor 41 that detects the voltage VB1 and outputs the detection result to the ECU 40.

The smoothing capacitor C2 smoothes a voltage VB2 between terminals of the battery B2. The battery B2 is provided with a voltage sensor 42 that detects the voltage VB2 and outputs the detection result to the ECU 40.

The boosting converter 10 corresponds to one embodiment of the "first voltage converter". The boosting converter 10 increases the voltage of the battery B1 and supplies the electric power to the power feed line PL.

The boosting converter 10 includes: a reactor L1, one end of which is connected to the positive electrode of the battery B1; an upper arm element that includes a switching element Q1 and a diode D1, both of which are provided between the other end of the reactor L1 and the power feed line PL; and a lower arm element that includes a switching element Q2 and a diode D2, both of which are provided between the other end of the reactor L1 and the negative electrode of the battery B1. The reactor L1 corresponds to one embodiment of the "first reactor". In the following description, the end of the reactor L1 that is connected to the positive electrode of the battery B1 will also be referred to as "the one end of the reactor L1", and the end of the reactor L1 that is connected to the switching element Q2 will also be referred to as "the other end of the reactor L1".

The switching element Q1 corresponds to one embodiment of the "first upper switching element". The switching element Q1 is constructed of an IGBT element. A collector of the switching element Q1 is connected to the power feed line PL via a supply line PL1. The supply line PL1 is a supply line for supplying the electric power from the battery B1 to the power feed line PL. A cathode of the diode D1 is connected to the collector of the switching element Q1. An anode of the diode D1 is connected to an emitter of the switching element Q1.

The switching element Q2 corresponds to one embodiment of the "first lower switching element". The switching element Q2 is constructed of the IGBT element. A collector of the switching element Q2 is connected to the other end of the reactor L1. An emitter of the switching element Q2 is connected to the negative electrode of the battery B1. A cathode of the diode D2 is connected to the collector of the switching element Q2. An anode of the diode D2 is connected to the emitter of the switching element Q2.

The boosting converter 10 that has a configuration as described above increases the voltage of the battery B1 and supplies the electric power to the power feed line PL in accordance with a control signal PWC1 that is output from the ECU 40 on the basis of the voltage VB1 detected by the voltage sensor 41 and the voltage VH detected by the voltage sensor 43. In the boosting converter 10 during a boosting operation, the switching element Q1 is maintained in an off state, and the switching element Q2 is turned on/off at a specified duty ratio. In this way, a current that flows during an on state of the switching element Q2 is stored as electromagnetic energy in the reactor L1. When the switching element Q2 is shifted to an off state, the stored electromagnetic energy is superimposed on a discharged current. The voltage of the battery B 1 is thereby increased.

In addition, in the boosting converter 10, a switching device 50 is provided in a path between the other end of the reactor L1 and a connection point X between a supply line PL2 and the power feed line PL. The switching device 50 corresponds to one embodiment of the "first shutoff device". It is noted that the supply line PL2 is a supply line for supplying the electric power from the battery B2 to the power feed line PL. The switching device 50 will be described in detail below.

The boosting converter 20 corresponds to one embodiment of the "second voltage converter". The boosting converter 20 increases the voltage of the battery B2 and supplies the electric power to the power feed line PL.

The boosting converter 20 includes: a reactor L2, one end of which is connected to the positive electrode of the battery B2; an upper arm element that includes a switching element Q3 and a diode D3, both of which are provided between the other end of the reactor L2 and the power feed line PL; and a lower arm element that includes a switching element Q4 and a diode D4, both of which are provided between the other end of the reactor L2 and the negative electrode of the battery B2. The reactor L2 corresponds to one embodiment of the "second reactor". In the following description, the end of the reactor L2 that is connected to the positive electrode of the battery B2 is also referred to as "the one end of the reactor L2", and the end of the reactor L2 that is connected to the switching element Q4 is also referred to as "the other end of the reactor L2".

The switching element Q3 corresponds to one embodiment of the "second upper switching element". The upper arm element (the switching element Q3, the diode D3) of the boosting converter 20 has the same configuration as the upper arm element (the switching element Q1, the diode D1) of the above-described boosting converter 10, and thus the description thereon will not be repeated.

The switching element Q4 corresponds to one embodiment of the "second lower switching element". The lower arm element (the switching element Q4, the diode D4) of the boosting converter 20 has the same configuration as the lower arm element (the switching element Q2, the diode D2) of the above-described boosting converter 10, and thus the description thereon will not be repeated.

The boosting converter 20 that has such a configuration increases the voltage of the battery B2 and supplies the electric power to the power feed line PL in accordance with a control signal PWC2 that is output from the ECU 40 on the basis of the voltage VB2 detected by the voltage sensor 42 and the voltage VH detected by the voltage sensor 43. Because a boosting operation of the boosting converter 20 is the same as a boosting operation of the boosting converter 10, the description thereon will not be repeated.

It is noted that, although the boosting converters 10, 20 are operated as booster circuits, they may be operated as voltage lowering circuits when electric power that is generated by the motor generator MG during regenerative braking of the electric vehicle 1 is returned to the batteries B 1, B2.

As described above, by using the two batteries B1, B2 and the two boosting converters 10, 20, a power storage amount that is sufficient to operate the motor generator MG can stably be secured. In addition, even in the case where a power storing state of one of the batteries is degraded, the electric power can be supplied to the motor generator MG by using the other battery only.

A description will now be provided on a case where short circuit failure of the upper arm element (failure of the switching element Q1 to be maintained constantly in an on state) occurs in the boosting converter 10 that is connected to the battery B1 on the low-voltage side in the power supply system 100 described above.

While the boosting converter 10 is operated normally, a short circuit current is not generated from the battery B2 toward the battery B1 due to an operation of the upper arm element. However, in the case where the short circuit failure of the upper arm element occurs in the boosting converter 10, the short circuit current is possibly generated from the battery B2 toward the battery B1 due to application of the voltage by the battery B2, which is higher than that by the battery B1, to the connection point X.

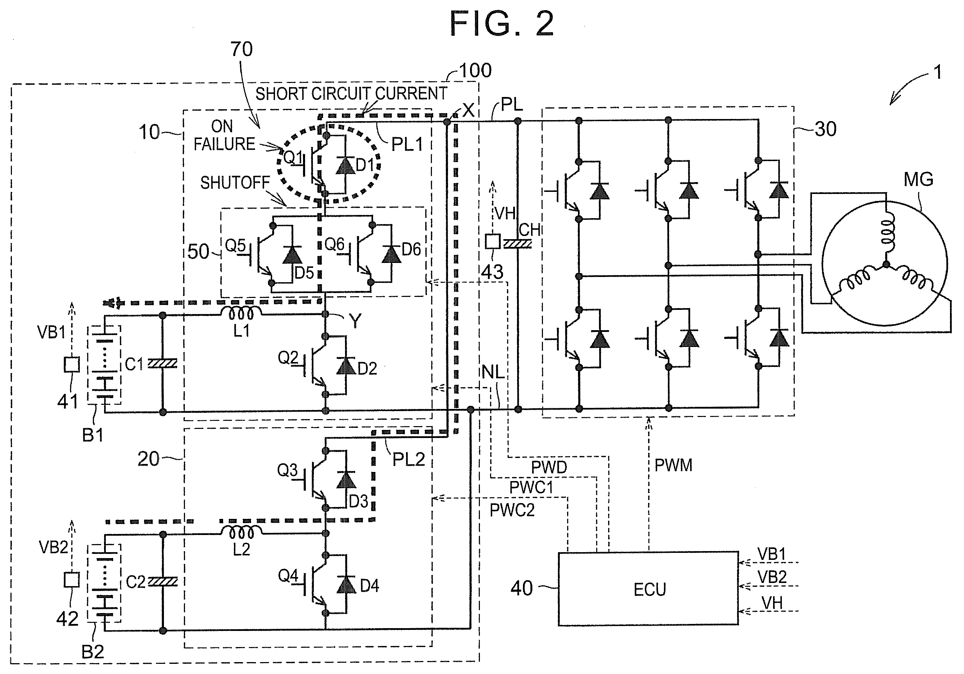

For example, FIG. 2 is a view that shows a path of the short circuit current in the case where the short circuit failure of the upper arm element occurs in the boosting converter 10 on the low-voltage side. Here, a description will be provided on a case where a switching element Q5 and a switching element Q6 in the switching device 50, which will be described below, are maintained in on states (that is, the same as a case where the switching device 50 is not provided).

As indicated by a dotted arrow in FIG. 2, in the case where the short circuit failure of the upper arm element occurs in the boosting converter 10, the short circuit current is generated from the positive electrode of the battery B2 toward the battery B1 along a path that sequentially runs through the reactor L2, the diode D3 of the boosting converter 20, the supply line PL2, the connection point X, the supply line PL1, the switching element Q1, and the reactor L1.

The battery B1 includes a fuse mechanism that prevents such a large short circuit current that flows in the case where short circuit failure of the lower arm element occurs in the boosting converter 10. However, with the short circuit current that flows from the battery B2 as described above, a long time is required until the fuse mechanism is actuated, and thus the battery B 1 is possibly overcharged.

In view of this, it is considered to provide a switching device between the battery B1 and the boosting converter 10, more specifically, between the battery B 1 and the one end of the reactor L1 to shut off a path. However, even in the case where the path between the battery B1 and the boosting converter 10 is shut off by the switching device, the path from the battery B2 to the reactor L1 remains to be connected. Accordingly, the voltage of the battery B2 is applied to the reactor L1, and the reactor L1 is possibly damaged. Furthermore, in the case where the switching device is provided on the battery B1 side from the smoothing capacitor C1, the voltage of the battery B2 is also applied to the smoothing capacitor C1, and thus even the smoothing capacitor C1 is possibly damaged.

In view of such a problem, in the power supply system 100 of this embodiment, the switching device 50 is provided in the path 70 between the connection point X and the other end of the reactor L1 (corresponding to one embodiment of the "first path") in the boosting converter 10. More specifically, the switching device 50 is provided between the switching element Q1 and a connection point Y between the other end of the reactor L1 and the switching element Q2.

The switching device 50 includes: the switching element Q5 that is constructed of an IGBT element in the same specification as that of the switching element Q1; the switching element Q6 that is constructed of an IGBT element in the same specification as that of the switching element Q2; a diode D5 in the same specification as the diode D1; and a diode D6 in the same specification as the diode D2. It is noted that the same specification means that parts of both members are in the same shape (for example, the same package) and have the same performance. That is, when the parts of both of the members are in the same specification, the parts of both of the members can be made common.

A collector of the switching element Q5 and a collector of the switching element Q6 are connected to the emitter of the switching element Q1. An emitter of the switching element Q5 and an emitter of the switching element Q6 are connected to the other end of the reactor L1 and the collector of the switching element Q2. A cathode of the diode D5 is connected to the collector of the switching element Q5. An anode of the diode D5 is connected to the emitter of the switching element Q5. A cathode of the diode D6 is connected to the collector of the switching element Q6. An anode of the diode D6 is connected to the emitter of the switching element Q6.

Just as described, the switching device 50 has the two switching elements Q5, Q6 that are respectively in the same specifications as the switching element Q1 of the upper arm element and the switching element Q2 of the lower arm element in the boosting converter 10. Accordingly, the same module as a module in which the switching element Q1 and the switching element Q2 used for the boosting converter 10 are integrated (that is, a module in which the switching element Q5 and the switching element Q6 are integrated) can be used for the switching device 50. Thus, the parts can be made common. It is noted that all of the switching element Q1, the switching element Q2, the switching element Q5, and the switching element Q6 may be switching elements in the same specification.

In the switching device 50, the switching element Q5 and the switching element Q6 are maintained in the on states during normal time. Thus, the path 70 is not shut off by the switching device 50 during the normal time. On the other hand, in the case where the short circuit failure of the upper arm element occurs in the boosting converter 10, the switching element Q5 and the switching element Q6 are maintained in off states in the switching device 50 in accordance with a control signal PWD that is output from the ECU 40. Thus, the path 70 is shut off by the switching device 50.

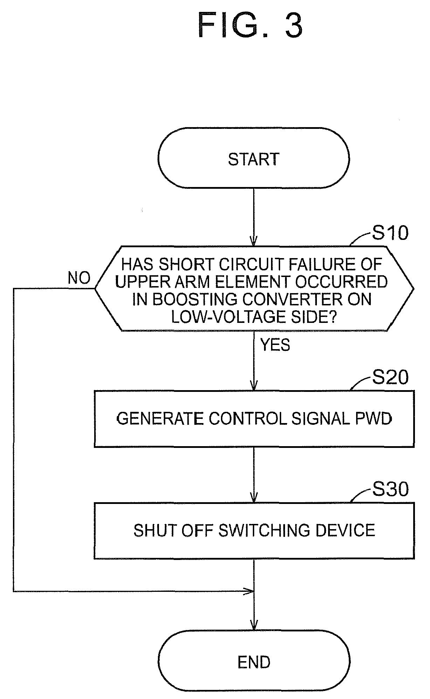

A description will now be provided on specific processing of the ECU 40. FIG. 3 is a flowchart that shows one example of processing of the ECU 40. It is noted that, although each step in the flowchart shown in FIG. 3 is basically realized by software processing by the ECU 40, it may be realized by hardware (an electronic circuit) that is manufactured in the ECU 40.

The ECU 40 determines whether the short circuit failure of the upper arm element has occurred in the boosting converter 10 on the low-voltage side (S10). The switching element Q1 constitutes, in addition to an integrated circuit (IC), which is not shown, an intelligent power module (IPM) that includes an abnormality self-detecting function. In the processing in S10, presence or absence of occurrence of the short circuit failure is determined on the basis of a failure detection signal that is output by the IPM when an overcurrent, an overvoltage, or the like is detected. In the case where the short circuit failure has not occurred (NO in S10), the ECU 40 terminates this routine.

On the other hand, in the case where the short circuit failure has occurred (YES in S10), the ECU 40 generates the control signal PWD for switching the switching element Q5 and the switching element Q6 of the switching device 50 from the on states to the off states (S20). Thereafter, the ECU 40 switches the switching element Q5 and the switching element Q6 from the on states to the off states by outputting the control signal PWD to the switching device 50, shuts off the switching device 50 (S30), and terminates this routine.

In this way, in the case where the short circuit failure of the upper arm element occurs in the boosting converter 10, the path 70 between the connection point X and the other end of the reactor L1 is shut off by the switching device 50. Accordingly, it is possible to prevent generation of the short circuit current from the battery B2 on the high-voltage side toward the battery B 1 on the low-voltage side as indicated by the dotted arrow in FIG. 2, and it is also possible to prevent damage to the reactor L1, which is caused by the application of the voltage of the battery B2 to the reactor L1. Furthermore, it is possible to prevent the application of the voltage of the battery B2 to the smoothing capacitor C1.

In addition, it is possible to prevent the application of the voltage of the battery B2 to the lower arm element (the switching element Q1, the diode D2) by providing the switching device 50 between the connection point Y and the switching element Q1.

Moreover, in the case where the boosting converter 20 is provided for the battery B2 as in this embodiment, the further stabilized electric power can be supplied to the motor generator MG even when the short circuit failure of the upper arm element occurs in the boosting converter 10 and the path 70 is shut off by the switching device 50. In this way, the electric vehicle 1 can be retreated by the electric power of the battery B2.

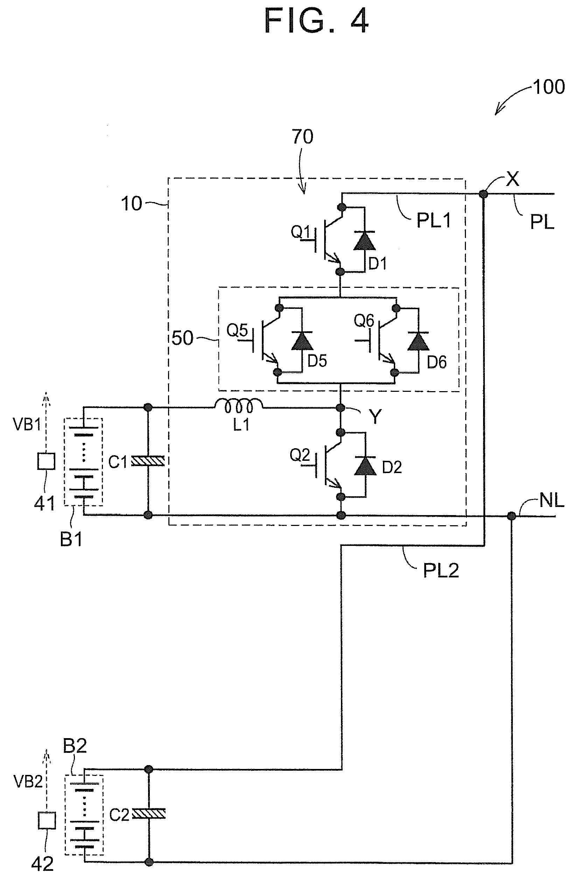

[Modified Example] In this embodiment, the battery B1 and the battery B2 are respectively provided with the boosting converters 10, 20. However, because the voltage of the battery B2 is originally high, the boosting converter 20 may not be provided as shown in FIG. 4.

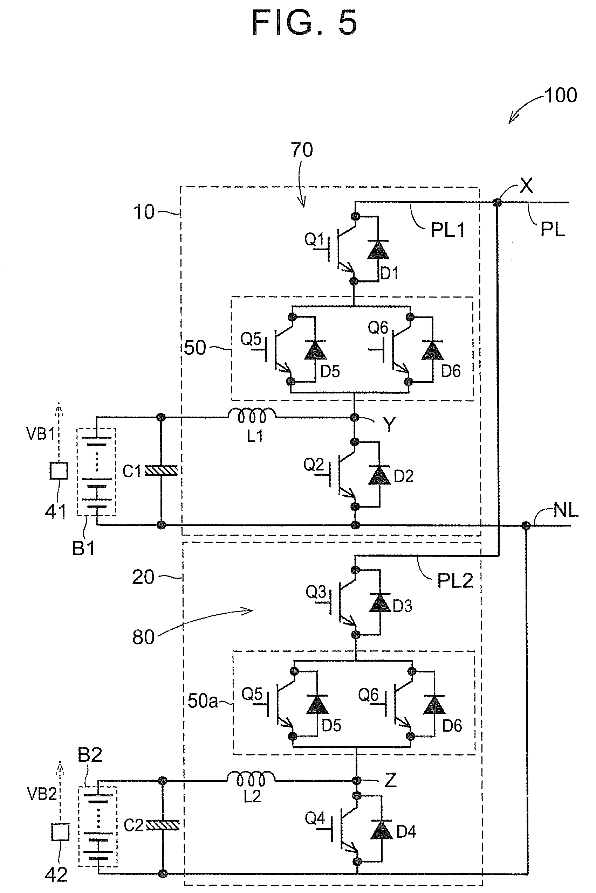

In this embodiment, the switching device 50 is only provided in the boosting converter 10. However, there is a case where the high-voltage side and the low-voltage side are reversed due to variations in the voltage of the batteries B1, B2, variations in the boosting operation of the boosting converters 10, 20, and the like. Thus, as shown in FIG. 5, a switching device 50a in the same specification as the switching device 50 may be provided in the boosting converter 20 at a position that corresponds to a position of the switching device 50 (between the switching element Q3 and a connection point Z between the other end of the reactor L2 and the switching element Q4). The switching device 50a corresponds to one embodiment of the "second shutoff device".

In this way, in the case where the short circuit failure of the switching element Q3 occurs in the boosting converter 20, the path 80 between the connection point X and the other end of the reactor L2 (the end of the reactor L2 that is connected to the switching element Q4) (corresponding to one embodiment of the "second path") is shut off by the switching device 50a. Accordingly, even in the case where the high-voltage side and the low-voltage side are reversed due to the variations in the voltage of the batteries B1, B2 and the like, it is possible to prevent the generation of the short circuit current from the battery B1 toward the battery B2, and it is also possible to prevent damage to the reactor L2, which is caused by the application of the voltage of the battery B2 to the reactor L2.

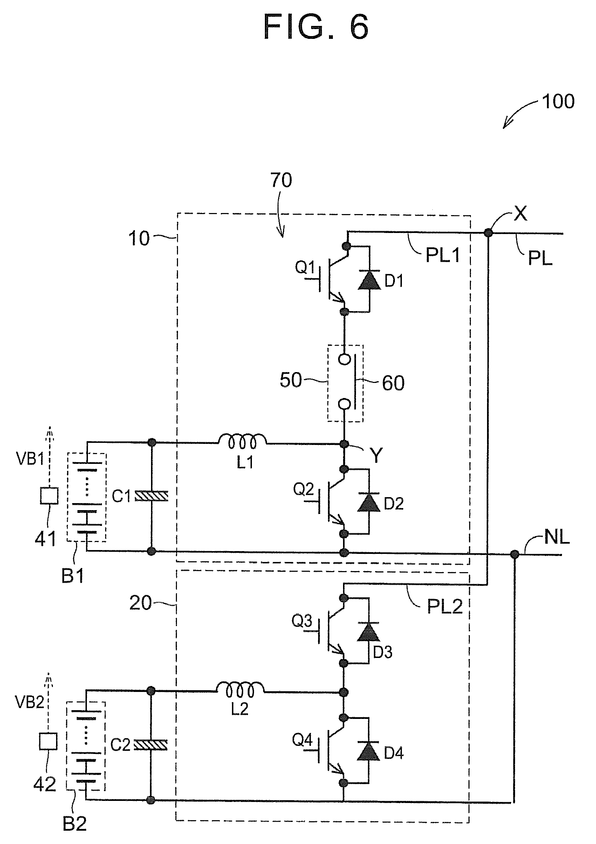

In this embodiment, the switching device 50 is configured by including the switching elements Q5, Q6, each of which is constructed of the IGBT element, and the diodes D5, D6. However, the switching device 50 may be configured by including another member. For example, as shown in FIG. 6, the switching device 50 may be configured by including a relay 60.

In this embodiment, the switching device 50 is provided between the connection point Y and the switching element Q1. However, when it is considered to prevent the application of the voltage of the battery B2 to the reactor L1, the switching device 50 may be provided at any position in the path 70 between the connection point X and the other end of the reactor L1.

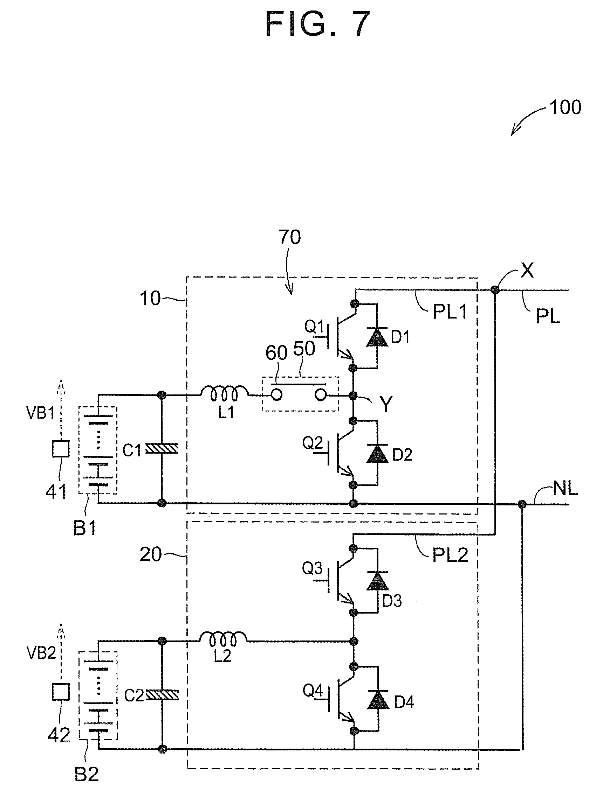

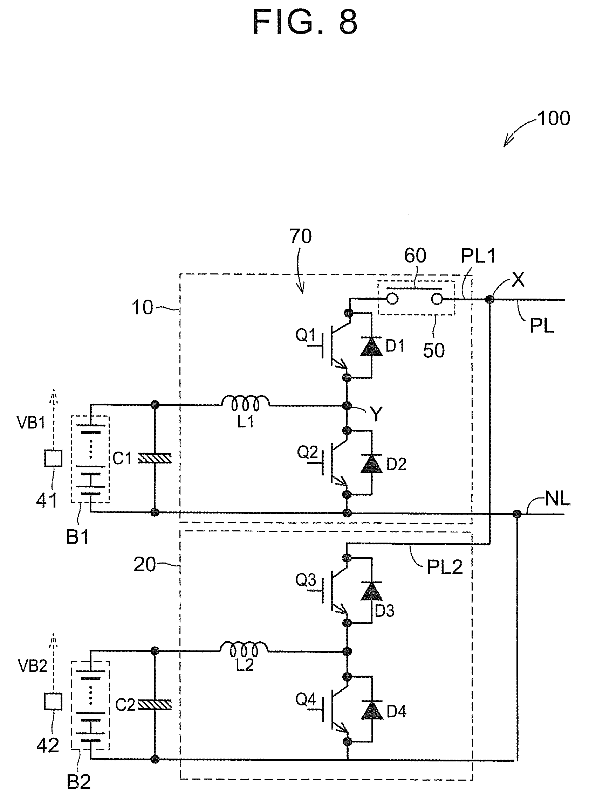

For example, as shown in FIG. 7, the switching device 50 may be provided between the connection point Y and the other end of the reactor L1. Alternatively, as shown in FIG. 8, the switching device 50 may be provided between the connection point X and the switching element Q1.

It is noted that, although the switching device 50 is constructed of the relay 60 in FIG. 7 and FIG. 8, the switching device 50 may be configured by including the two switching elements Q5, Q6 as in this embodiment.

In this embodiment, the switching device 50 of the boosting converter 10 is configured by including the two switching elements Q5, Q6. However, the switching device 50 may be configured by including one switching element. Furthermore, in this case, it is preferred that the switching device 50a of the boosting converter 20 is also configured by including one switching element. In this way, plural modules can be used in common, such as a module in which the upper arm element and the lower arm element of the boosting converter 10 are integrated, a module in which the upper arm element and the lower arm element of the boosting converter 20 are integrated, and a module in which the switching device 50 of the boosting converter 10 and the switching device 50a of the boosting converter 20 are integrated. Thus, efficiency can be enhanced when a structure of a cooler is reviewed.

In addition, in this embodiment, the upper arm element and the lower arm element of the boosting converter 10 are each configured by including one switching element. However, each may be configured by including two switching elements. In this way, the same module as the module in which the upper arm element and the lower arm element of the boosting converter 10 are integrated can be used for the switching device 50, and thus the parts can be made common.

Furthermore, the above-described embodiment and the modified example thereof can appropriately be combined.

The embodiment that has been disclosed herein is illustrative in all aspects, and thus it should not be considered as being restrictive. The scope of the invention is not indicated by the above description but by the claims, and is intended to include all changes that are in the equivalent meanings and within the equivalent scope to the claims.

In this embodiment, the power supply system 100 includes the battery B 1 on the low-voltage side, the battery B2 on the high-voltage side, and the boosting converter 10 that is provided between the battery B and the power feed line PL. The boosting converter 10 includes: the reactor L1, the one end of which is connected to the positive electrode of the battery B1; the switching element Q1 that is provided between the other end of the reactor L1 and the power feed line PL; and the switching element Q2 that is provided between the other end of the reactor L1 and the negative electrode of the battery B1. The switching device 50 that shuts off the path 70 between the connection point X and the other end of the reactor L1 when the short circuit failure occurs in the switching element Q1 is provided in the path 70.

## Claims

1. A power supply system for supplying electric power to a drive unit (MG) comprising:
a first power storage device (B1) configured to supply electric power to a power feed line (PL), the power feed line (PL) being configured to supply electric power to the drive unit (MG);
a second power storage device (B2) connected to the power feed line (PL) in a manner to be parallel with the first power storage device (B1), the second power storage device (B2) being configured to supply electric power to the power feed line (PL) via a second supply line (PL2), a voltage of the electric power supplied by the second power storage device (B2) to the power feed line (PL) being higher than a voltage of the electric power supplied by the first power storage device (B1) to the power feed line (PL); and
a first voltage converter (10) provided between the first power storage device (B1) and the power feed line (PL), the first voltage converter (10) including:
a first reactor (L1), wherein one end of the first reactor (L1) is connected to a positive electrode of the first power storage device (B 1);
a first upper switching element (Q1) provided between the other end (Y) of the first reactor (L1) and the power feed line (PL);
a first lower switching element (Q2) provided between the other end (Y) of the first reactor (L1) and a negative electrode of the first power storage device (B1); and
a first shutoff device (50) provided in a first path (70) between the other end (Y) of the first reactor (L1) and a connection point (X), the connection point (X) being a connection point between the power feed line (PL) and the second supply line (PL2), the first shutoff device (50) being configured to shut off the first path (70) when short circuit failure occurs in the first upper switching element (Q1).

2. The power supply system according to claim 1, wherein
the first shutoff device (50) includes a third switching element (Q5) and a fourth switching element (Q6), the third switching element (Q5) is in the same specification as the first upper switching element (Q1), and the fourth switching element (Q6) is in the same specification as the first lower switching element (Q2).

3. The power supply system according to claim 1 or 2, wherein
the power supply system further includes a second voltage converter (20) provided between the second power storage device (B2) and the power feed line (PL).

4. The power supply system according to claim 3, wherein
the first power storage device (B1) is configured to supply the electric power to the power feed line (PL) via a first supply line (PL1),
the second voltage converter (20) includes:
a second reactor (L2), wherein one end of the second reactor (L2) is connected to a positive electrode of the second power storage device (B2);
a second upper switching element (Q3) provided between the other end (Z) of the second reactor (L2) and the power feed line (PL);
a second lower switching element (Q4) provided between the other end (Z) of the second reactor (L2) and a negative electrode of the second power storage device (B2); and
a second shutoff device (50a) provided in a second path (80) between the other end (Z) of the second reactor (L2) and the connection point (X), the connection point (X) being a connection point between the power feed line (PL) and the first supply line (PL1), the second shutoff device (50a) being configured to shut off the second path (80) when short circuit failure occurs in the second upper switching element (Q3).
